# EUROPÄISCHE PATENTSCHRIFT

(11) **EP 0 714 428 B1**
(45) Veröffentlichungstag und Bekanntmachung des Hinweises auf die Patenterteilung: **02.06.1999**
(21) Anmeldenummer: 94922847.2
(22) Anmeldetag: 08.08.1994
(51) Int. Cl.: C10B 53/00, C10B 1/10

(54) **ANLAGE ZUR THERMISCHEN ABFALLENTSORGUNG SOWIE VERFAHREN ZUM BETRIEB EINER SOLCHEN ANLAGE**
THERMAL WASTE DISPOSAL PLANT AND PROCESS FOR OPERATING THE SAME
INSTALLATION D'ELIMINATION THERMIQUE DE DECHETS ET PROCEDE PERMETTANT LE FONCTIONNEMENT D'UNE INSTALLATION DE CE TYPE

(30) Priorität: 19.08.1993 DE 4327953
(43) Veröffentlichungstag der Anmeldung: 05.06.1996
(73) Patentinhaber: SIEMENS AKTIENGESELLSCHAFT, 80333 München (DE)
(72) Erfinder: MAY, Karl, D-61118 Bad Vilbel (DE); TRATZ, Herbert, D-91242 Ottensoos (DE); ENGELHARDT, Reiner, D-91090 Effeltrich (DE)
(86) Internationale Anmeldenummer: DE9400913
(87) Internationale Veröffentlichungsnummer: WO9505432

(56) Entgegenhaltungen:
- EP-A- 0 302 310
- EP-A- 0 360 052
- WO-A-81/01010
- DE-A- 3 815 187
- FR-A- 2 350 550

## Beschreibung

Die Erfindung bezieht sich auf ein Verfahren zum Betrieb einer Anlage zur thermischen Abfallentsorgung mit einem Pyrolysereaktor, der eine erste Heizeinrichtung für die indirekte Beheizung des Abfalls innerhalb des Pyrolysereaktors besitzt, der eine zweite Heizeinrichtung für die direkte Beheizung des Abfalls innerhalb des Pyrolysereaktors durch Lufteinspeisung aufweist und der den Abfall in Schwelgas und festen Pyrolysereststoff umsetzt, und mit einem Hochtemperatur-Reaktor, in dem zumindest der Pyrolysereststoff verbrannt wird. Die Erfindung bezieht sich weiterhin auf eine ebensolche Anlage zur thermischen Abfallentsorgung. Sie ist insbesondere auf dem Gebiet der Abfall-Entsorgung nach dem Schwelbrenn-Verfahren einsetzbar.

Auf dem Gebiet der Abfallbeseitigung ist das sogenannte Schwelbrenn-Verfahren bekannt geworden. Das Verfahren und eine danach arbeitende Anlage zur thermischen Abfallentsorgung sind beispielsweise in der EP-A-0 302 310 sowie in der DE-A-38 30 153 beschrieben. Die Anlage zur thermischen Abfallentsorgung nach dem Schwelbrenn-Verfahren enthält als wesentliche Komponenten einen Pyrolysereaktor und eine Hochtemperatur-Brennkammer. Der Pyrolysereaktor setzt den über eine Abfall-Transporteinrichtung aufgegebenen Abfall in Schwelgas und Pyrolysereststoff um. Das Schwelgas sowie, nach geeigneter Aufarbeitung, der Pyrolysereststoff werden sodann dem Brenner der Hochtemperatur-Brennkammer zugeführt. Hier entsteht eine schmelzflüssige Schlacke, die über einen Abzug entnommen wird und die nach Abkühlung in verglaster Form vorliegt. Das entstehende Rauchgas wird über eine Rauchgasleitung einem Kamin als Auslaß zugeführt. In diese Rauchgasleitung sind insbesondere ein Abhitze-Dampferzeuger, eine Staubfilteranlage und eine Rauchgasreinigungsanlage eingebaut.

Weiterhin befindet sich in der Rauchgasleitung ein Saugzuggebläse. Dieses dient zur Aufrechterhaltung eines - wenn auch nur geringen - Unterdrucks in der Pyrolysetrommel. Durch diesen Unterdruck wird verhindert, daß Schwelgas durch die Ringdichtungen der Pyrolysetrommel nach außen in die Umgebung austritt.

Es hat sich gezeigt, daß im Betrieb beim Eintritt des Schwelgases und des Pyrolysereststoffes in die Hochtemperatur-Brennkammer keine konstanten Verhältnisse herrschen. In Abhängigkeit von der Zusammensetzung des dem Pyrolysereaktors zugeführten Abfalls schwankt die Schwelgas-Feuchte und der Heizwert des Schwelgases, aber auch der des Pyrolysereststoffes. Das bedeutet, daß das Energieangebot in der Brennkammer Schwankungen unterworfen ist. Gleichzeitig variiert der Energiebedarf im Pyrolysereaktor. Mit anderen Worten: Das Wärmeangebot in der Brennkammer und der Energiebedarf im Pyrolysereaktor sind von Art und Beschaffenheit des Abfalls abhängig. Liegt beispielsweise ein heizwertreicher Abfall mit geringer Feuchte vor, so steigt das Energieangebot in der Brennkammer, und im Pyrolysereaktor sinkt der Energiebedarf, der zum Verschwelen des Abfalls benötigt wird. Liegt andererseits ein heizwertarmer und feuchter Abfall vor, so sinkt das Energieangebot in der Brennkammer, und der Energiebedarf im Pyrolysereaktor steigt an.

Die praktische Erfahrung hat gelehrt, daß weitgehend konstante Betriebsparameter in dem Pyrolysereaktor und in der Brennkammer eingestellt oder gehalten werden sollten. Von besonderer Bedeutung ist es, trotz variierender Zusammensetzung des Abfalls stets dafür zu sorgen, daß dem Abfall im Pyrolysereaktor eine für die Verschwelung (Pyrolyse) ausreichende Wärmemenge zur Verfügung gestellt wird.

In der DE-A-38 15 187 wird eine Anlage zur thermischen Abfallentsorgung beschrieben, bei der der Abfall im Pyrolysereaktor indirekt über sich in dessen Längsrichtung erstreckende, von einem Heizgas durchströmte Heizrohre erwärmt wird. Das Heizgas ist Luft, die in einem an dem Hochtemperatur-Reaktor angebrachten Wärmetauscher erhitzt und die im Kreislauf durch die besagten Heizrohre mittels eines Gebläses hindurchgeschickt wird. In diesem Heizkreislauf liegt noch ein Wärmetauscher, der zur gesteuerten Auskopplung nicht benötigter Wärme dient. Auf diese Weise erhält der Pyrolysereaktor über das Heizgas ein dem aktuellen Bedarf entsprechendes Wärmeenergie-Angebot, während die Temperaturbedingungen in der Nachbrennkammer des Hochtemperatur-Reaktors durch einen Regelkreis konstant gehalten werden. Es hat sich nun gezeigt, daß der erwähnte Wärmetauscher, der mit dem Hochtemperatur-Reaktor gekoppelt ist, relativ teuer und aufwendig ist, weil er für recht hohe Temperaturen, die zum Beispiel 520 bis 800 °C betragen können, auszulegen ist. Erstrebenswert ist eine kostengünstigere Ausgestaltung der Heizung des Pyrolysereaktors (Schweltrommel).

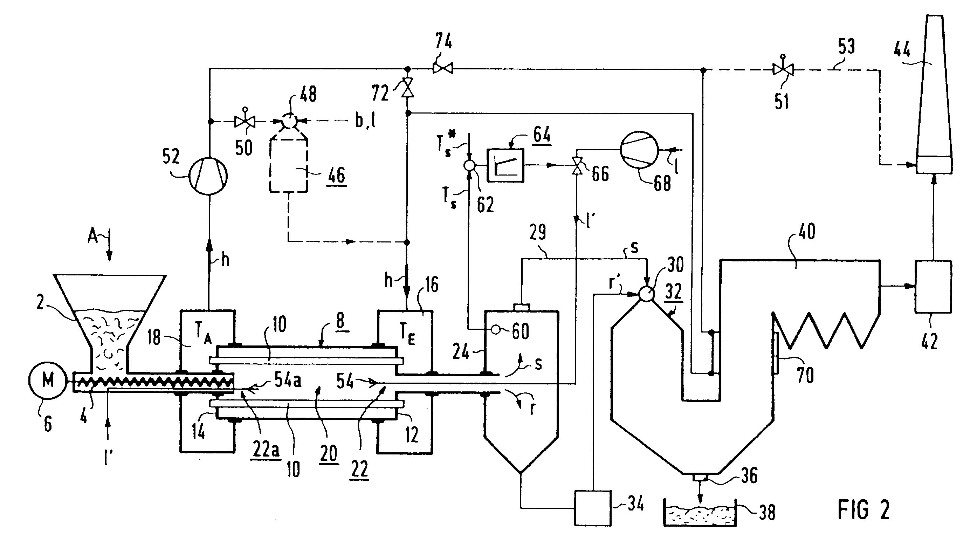

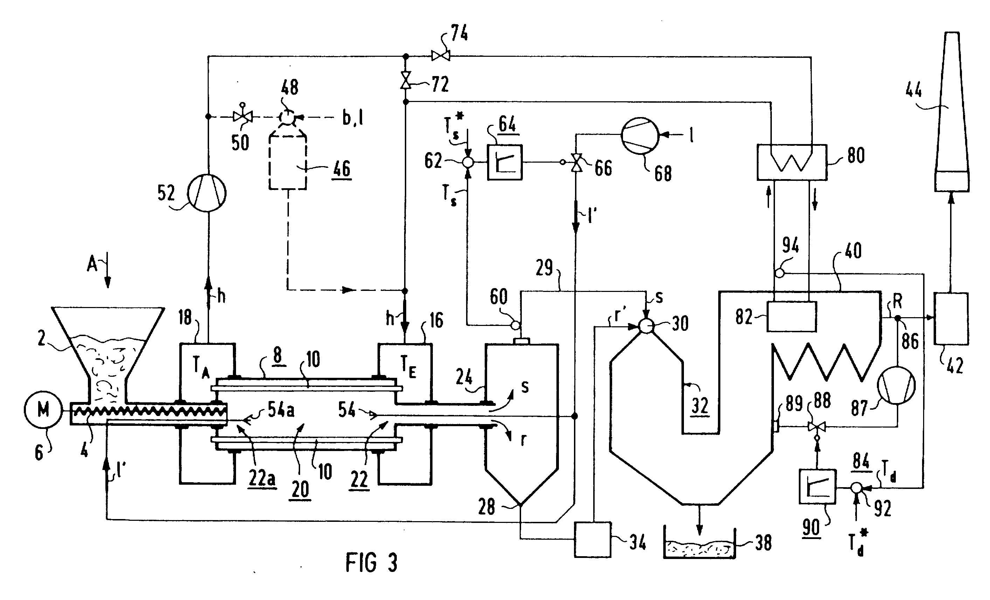

Ein Verfahren und eine Anlage der eingangs genannten Art sind aus Figur 3 der EP-A-0 360 052 bekannt. Danach ist der Pyrolysereaktor mit einer ersten Heizeinrichtung für die indirekte Beheizung des Abfalls und mit einer zweiten Heizeinrichtung für die direkte Beheizung desselben versehen. Die erste Heizeinrichtung für die indirekte Beheizung umfaßt wiederum eine Anzahl von parallelen Heizrohren für ein hin- und rückströmendes Wärmeträgermedium, beispielsweise für Thermoöl, Heißwasser, Sattdampf oder ein Dampf-Wasser-Gemisch. Dieses Wärmeträgermedium strömt im Kreislauf durch ein Wärmetauschersystem. Diese erste Heizeinrichtung ist nur im Abfall-Eingangsbereich des Innenraums des Pyrolysereaktors angeordnet. Die zweite Heizeinrichtung für die direkte Beheizung des Abfalls umfaßt eine Lufteinspeisung, die kontrolliert Luft in den Schwelraum einspeist. Diese zweite Heizeinrichtung ist im Abfall-Eingangs- und/oder Abfall-Ausgangsbereich des Innenraums des Pyrolysereaktors angeordnet. Die inverse Flamme liegt im Betrieb im Ausgangsbereich. Der Pyrolysereaktor (Schweltrommel) kann sich zwecks Umwälzung des eingebrachten Abfalls mit Hilfe eines Getriebemotors um die Zentralachse drehen. Er arbeitet bei 300 bis 600 °C, wird weitgehend unter Sauerstoffabschluß, das heißt in reduzierender Atmosphäre, betrieben und erzeugt neben Wasserdampf und flüchtigem Schwelgas auch einen festen Pyrolysereststoff. - In dieser Druckschrift ist auch eine Ausführungsform in Figur 2 dargestellt, bei der eine direkte Beheizung durch Teilverbrennung des im Pyrolysereaktor entstehenden Schwelgases gewährleistet ist durch die Zufuhr von vorgewärmter oder kalter Luft über stationär angeordnete Rohre unterschiedlicher Länge, die an ihrem Ende jeweils mit mehreren Löchern oder Düsen versehen sind, die als Brenner fungieren. In den Luftzuleitungen zu den Rohren liegen steuerbare Ventile, über die jeweils die Luftzufuhr zu den Löchern (Düsen) einstellbar oder regelbar ist. Durch die Zufuhr der Luft über die gelochten, feststehenden Rohre und die Steuerung mittels der Ventile ist ein zonenweises Dosieren innerhalb des Schwelbereichs möglich. Die zugeführte Luft kann dabei jeweils bedarfsabhängig gesteuert werden. Somit kann auch die Energiezufuhr zur Verschwelung des Abfalls bedarfsabhängig, das heißt an die Abfall-Zusammensetzung angepaßt, in den einzelnen Schwelzonen gesteuert werden. Denn im Bereich der Löcher (Düsen) entstehen inverse Flammen, die zu einer direkten Aufheizung des darunter befindlichen Abfalls führen. - Bei den beiden Ausführungsformen nach Figur 2 und 3 wird jeweils praktisch die gesamte für die Verschwelung erforderliche Wärmemenge von der betreffenden Heizeinrichtung aufgebracht. Dies kann recht umständlich sein.

Aufgabe der Erfindung ist es, ein Verfahren und eine Anlage der eingangs genannten Art anzugeben, bei der die Beheizung des Abfalls im Pyrolysereaktor kostengünstig und einfach erfolgt.

Die Erfindung beruht auf der Überlegung, daß dieses erreicht werden kann durch eine Aufteilung der Beheizung in eine Grunderwärmung, die den weitaus größeren Teil der erforderlichen Aufheizung ausmacht, und eine Zusatzerwärmung, die den kleineren Teil ausmacht.

Die genannte Aufgabe wird bezüglich des Verfahrens demgemäß erfindungsgemäß gelöst durch
a) eine große Grunderwärmung des Abfalls (A) über die gesamte Länge des Pyrolysereaktors (8) durch die erste Heizeinrichtung (20) und
b) eine bedarfsgerechte, geregelte, kleine Zusatzerwärmung des Abfall (A) über die gesamte Länge des Pyrolysereaktors (8) durch die zweite Heizeinrichtung (22, 22a) durch Einführung von Luft (1') in den Innenraum des Pyrolysereaktors (8).

Im genannten Stand der Technik gemäß der EP-A-0 360 052 ist eine solche Aufteilung in Grund- und Zusatzerwärmung nicht vorgesehen. Vielmehr ist für den Abfall-Eingangsbereich die erste Heizeinrichtung und für den Abfall-Ausgangsbereich die zweite Heizeinrichtung jeweils ganz spezifisch vorgesehen. Gemäß der Erfindung geht es demgegenüber darum, den Pyrolysereaktor über seinen Querschnitt und in der Regel auch über seine gesamte Länge mit einer Grunderwärmung und einer bedarfsgerechten Zusatzerwärmung zu versorgen.

Bevorzugt wird dabei so vorgegangen, daß die Luft in den Innenraum des Pyrolysereaktors in gesteuerter Weise so eingeführt wird, daß die Temperatur des Schwelgases weitgehend konstant bleibt.

Die Luft kann prinzipiell in den Abfall-Eingangsbereich, in den Abfall-Ausgangsbereich oder aber in beide Bereiche eingebracht werden.

Von Vorteil ist es, wenn die Luft entweder in kaltem oder in vorgewarmtem Zustand in den Abfall-Ausgangsbereich des Pyrolysereaktors eingeführt wird. Hierdurch läßt sich eine schnelle Regelung gewährleisten. Prinzipiell kann man aber auch, wie erwähnt, kalte oder vorgewärmte Luft zwecks Teilverbrennung von Schwelgas und/oder Schwelreststoff in den Abfall-Eingangsbereich am kalten Trommelende in den Reaktionsraum einspeisen.

Zur Grunderwärmung des Abfalls kann Wärmeenergie verwendet werden, die
a) mit Hilfe eines Energieträgers gesondert erzeugt und/oder
b) als Abhitze dem Hochtemperatur-Reaktor entnommen wird.

Die genannte Aufgabe wird bezüglich der Anlage zur thermischen Abfallentsorgung erfindungsgemäß dadurch gelost, daß die erste Heizeinrichtung mindestens einen von Luft und von einem Energieträger gespeisten Brenner umfaßt. Dieser sollte mit seiner Flamme einen größeren Teil des Innenraums, bevorzugt im Abfall-Austrittsbereich, überstreichen.

Bevorzugte Weiterbildungen sind in den Unteransprüchen gekennzeichnet.

Ausführungsbeispiele der Erfindung werden im folgenden anhand von drei Figuren näher erläutert. Gleiche Bauteile sind mit denselben Bezugszeichen versehen. Es zeigen:
Figur 1 eine Anlage zur thermischen Abfallentsorgung, bei der die erste Heizeinrichtung durchgehende Heizrohre und einen gesonderten Brenner im Heizkreislauf umfaßt;
Figur 2 eine Anlage zur thermischen Abfallentsorgung, bei der die erste Heizeinrichtung wiederum durchgehende Heizrohre und einen Heizgaserzeuger im Heizkreislauf umfaßt; und
Figur 3 eine Anlage zur thermischen Abfallentsorgung, bei der die erste Heizeinrichtung ebenfalls durchgehende Heizrohre, diesmal aber einen vom Abhitzedampferzeuger gespeisten Dampf-Luftvorwärmer im Heizkreislauf umfaßt.

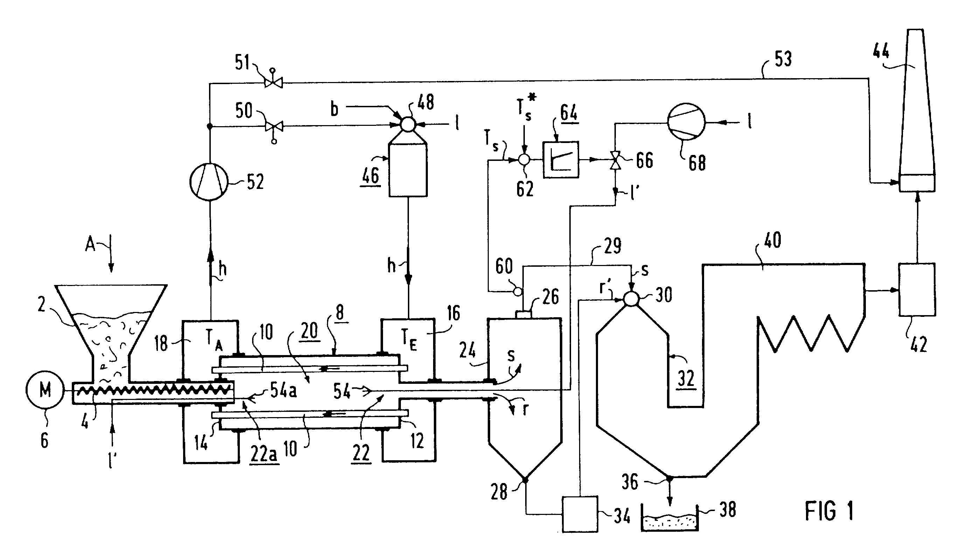

Nach Figur 1 wird fester Abfall A über eine Zuführ- oder Aufgabeeinrichtung 2 und eine Stopfschnecke 4, die von einem Motor 6 angetrieben wird, in einen Pyrolysereaktor 8 eingebracht. Dieser Pyrolysereaktor 8 ist im vorliegenden Fall als Pyrolyse- oder Schweltrommel ausgebildet und um seine Längsachse (durch nicht gezeigte Antriebsmittel) drehbar. Der Pyrolysereaktor 8 besitzt eine Vielzahl von parallel zueinander angeordneten Heizrohren 10, die sich zwischen Rohrböden 12, 14 in dessen Längsrichtung erstrecken. Der innen berohrte Pyrolysereaktor 8 besitzt je einen endseitig gelegenen Einlaß 16 und einen Auslaß 18 für Heizgas h. Die Eingangstemperatur des Heizgases h ist mit T_{E} und die Ausgangstemperatur ist mit T_{A} bezeichnet. Die Bauteile 10 bis 18 sind Bestandteile einer ersten Heizeinrichtung 20, die zur indirekten Beheizung des Abfalls A im Innenraum des Pyrolysereaktors 8 dient. Daneben ist noch eine zweite Heizeinrichtung 22 und/oder 22a vorgesehen, die der direkten Beheizung des Abfalls A im Innenraum durch Einblasen durch Luft 1' dient. Der Pyrolysereaktor 8 arbeitet bei einer einstellbaren Temperatur im Bereich von 300 bis 600 °C. Er wird weitgehend unter Sauerstoffabschluß betrieben und erzeugt neben Schwelgas s einen weitgehend festen Pyrolysereststoff r.

Dem Pyrolysereaktor 8 ist ausgangs- oder austragsseitig eine Austragsvorrichtung 24 nachgeschaltet, die mit einem Schwelgas-Abzugsstutzen 26 für den Abgang des Schwelgases s und mit einem Pyrolysereststoffausgang 28 für die Abgabe des festen Pyrolysereststoffes r versehen ist.

Eine an den Schwelgas-Abzugsstutzen 26 angeschlossene Schwelgasleitung 29 ist mit dem Brenner 30 eines Hochtemperatur-Reaktors 32 verbunden. Der Reststoff r wird einer geeigneten Behandlung, beispielsweise Abtrennung gewisser Komponenten und Zermahlen, in einer Reststoff-Aufbereitungseinrichtung 34 unterworfen. Der aufbereitete Reststoff r' wird ebenso wie das Schwelgas s dem Brenner 30 zugeführt. Hier findet eine Verbrennung statt, wobei eine Temperatur von 1200 °C und mehr und eine Verweilzeit der Gase von 1 bis 5 Sekunden erreicht werden. Der Hochtemperatur-Reaktor 32 ist mit einem Abzug 36 zum Austragen schmelzflüssiger Schlacke versehen, welche beim Abkühlen in einem Behälter 38 glasartig erstarrt.

Die vom Hochtemperatur-Reaktor 32 abgegebenen Rauchgase werden einem Abhitzekessel oder Abhitze-Dampferzeuger 40 zugeführt. Hier werden sie auf die erforderliche Eintrittstemperatur einer nachgeschalteten Rauchgas-Reinigungsanlage 42 abgekühlt. Das gereinigte Rauchgas kann sodann über einen Kamin 44 an die Umgebung abgegeben werden.

Von besonderer Bedeutung ist nun, daß das zur indirekten Beheizung des Pyrolysereaktors 8 vorgesehene Heizgas h durch eine Brennereinrichtung 46, beispielsweise einen Kanalbrenner, erzeugt wird. Deren Brenner 48 wird Luft 1 sowie ein Energieträger oder Brennmittel b, beispielsweise Öl oder Erdgas, zugeleitet. Mit Hilfe einer Schalteinrichtung oder eines Ventils 50 kann die Brennereinrichtung 46 in einen Heizkreislauf eingeschlossen werden. In diesem Heizkreislauf befindet sich auch ein Gebläse 52, das beispielsweise direkt an den Auslaß 18 angeschlossen sein kann. Das auf die Ausgangstemperatur T_{A} abgekühlte Heizgas h kann auch wahlweise über ein Ventil 51 und eine Abführleitung 53 ganz oder teilweise an den Kamin 44 abgegeben werden.

Im vorliegenden Ausführungsbeispiel beträgt die Einlaßtemperatur T_{E} des Heizgases h etwa 440 °C, und die Auslaßtemperatur T_{A} beträgt etwa 220 °C. Ohne die erwähnte Lufteinblasung mittels der zweiten Heizeinrichtung 22 und/oder 22a würde sich im Innenraum des Pyrolysereaktors 8 eine Schweltemperatur von etwa 400 °C ergeben. Eingehende Untersuchungen haben gezeigt, daß dies für die Verschwelung zu niedrig sein kann. Der Abfall kann dann nicht vollständig verschwelt werden, so daß sich eine nicht-vollständige Energieausnutzung ergibt. Um diesen Nachteil zu vermeiden, ist der Grunderwärmung des Abfalls A über die erste Heizeinrichtung 20 eine bedarfsgerechte Zusatzerwärmung des Abfalls A über die zweite Heizeinrichtung 22, 22a durch Einführung von Luft 1' in den Innenraum des Pyrolysereaktors 8 überlagert. Diese Einspeisung von Luft 1' führt beispielsweise zu einem Temperaturanstieg ΔT von 50 °C, so daß sich innerhalb des Pyrolysereaktors 8 eine Schweltemperatur von 450 °C ergibt. Diese Temperatur reicht im allgemeinen für eine vollständige Verkokung aus.

Die zweite Heizeinrichtung 22, 22a umfaßt einen oder mehrere Lufteinlässe oder Düsen 54, 54a für die gesteuert zugegebene Luft 1'. Liegt eine Mehrzahl dieser Lufteinlässe 54, 54a vor, so sollten diese über die Länge des Pyrolysereaktors 8 mehr oder weniger gleichmäßig verteilt sein. Für manche Anwendungsfälle kann es ausreichen, die Lufteinlässe 54, 54a nur an der Abfall-Ausgangsseite bzw. nur an der Abfall-Eingangsseite anzuordnen. Die Lufteinspeisung auf der Abfall-Ausgangsseite, also mittels der zweiten Heizeinrichtung 22, hat allerdings den Vorteil, daß eine Änderung des Stroms der aufgegebenen Luft 1' hier eine schnelle Reaktion hinsichtlich der Schweltemperatur Tₛ nachsichzieht. Damit ist eine schnelle Regelung möglich.

Aus Figur 1 ist weiter ersichtlich, daß die Luft 1' in den Innenraum des Pyrolysereaktors 8 mit Hilfe eines Regelkreises so eingeführt wird, daß die Temperatur Tₛ des Schwelgases s weitgehend konstant bleibt. Zur Messung der Temperatur Tₛ des Schwelgases s ist ein Temperatur-Fühler oder -Sensor 60 vorgesehen, der in der Austragseinrichtung 24 oder - wie dargestellt - in oder an der Schwelgasleitung 29 angeordnet ist. Der Sensor 60 ist mit dem Vergleichsglied 62 eines Reglers 64 verbunden, wobei dem Vergleichsglied 62 auch ein fester Sollwert Tₛ* für die Schwelgas-Temperatur Tₛ vorgegeben ist. Der Ausgang des Reglers 64 arbeitet auf ein Stellglied 66, beispielsweise auf ein Stellventil, dem von einem Gebläse 68 Luft 1 zugeführt wird. Der nach Maßgabe des Reglers 64 gesteuerte Luftstrom 1' wird der Luftdüse 54, 54a der zweiten Heizeinrichtung 22 bzw. 22a zugeleitet. Dieser Schwelgas-Temperatur-Regelkreis sorgt also dafür, daß die Schwelgastemperatur Tₛ auch bei variierendem Energiegehalt des Abfalls A weitgehend konstant bleibt, so daß sich eine gleichmäßig gute Verschwelung ergibt. Dies geschieht, obwohl der erforderliche Energieeintrag in den Pyrolysereaktor 8 zum Beispiel abhängig von der Feuchte ist und starken Schwankungen unterworfen sein kann.

In Figur 2 ist eine Anlage zur thermischen Abfallentsorgung gezeigt, die sich hinsichtlich des Aufbaus der ersten Heizeinrichtung 20 und geringfügig auch hinsichtlich des Aufbaus der zweiten Heizeinrichtung 22, 22a von der Anlage nach Figur 1 unterscheidet. Im folgenden wird im wesentlichen nur auf die Unterschiede eingegangen.

Nach Figur 2 umfaßt die erste Heizeinrichtung 20 einen Wärmetauscher oder Heizgaserzeuger 70, der am Ausgang des Hochtemperatur-Reaktors 32 angeordnet ist. Dieser Wärmetauscher 70 ist in einen Heizkreislauf eingeschlossen, zu dem das Eintrittsgehäuse 16, die Heizrohre 10, das Austrittsgehäuse 18 und das Gebläse 52 gehören. Mit Hilfe von zwei Ventilen 72, 74 ist es möglich, einen ausgewählten Teilstrom des Heizgases h über den Heizgaserzeuger 70 zu lenken und damit die Grunderwärmung einzustellen. Auch hier wird von der Erkenntnis ausgegangen, daß die Energieabgabe im Abhitze-Dampferzeuger 40 gemäß dem Energieeintrag des Abfalls A schwankt. Weiterhin beruht diese Ausführungsform auf der Überlegung, daß die für die Verschwelung erforderliche Grunderwärmung bis zu einer Schweltemperatur Tₛ von beispielsweise 400 °C von der Abhitze, die im Abhitze-Dampferzeuger 40 ausgekoppelt wird, aufgebracht werden kann. Die Zusatzerwärmung wird auch hier wieder durch die zweite Heizeinrichtung 22 und/oder 22a mittels Einblasen von Luft 1' bereitgestellt. Von Bedeutung ist vorliegend, daß der Wärmetauscher oder Heizgaserzeuger 70 kleiner gebaut werden kann als im Stande der Technik. Es reicht beispielsweise aus, ihn für 450 °C statt für 520 bis 550 °C auszulegen. Da er somit einer wesentlich niederen Temperatur ausgesetzt ist, besteht auch eine geringere Gefährdung gegenüber Korrosionsschäden.

Es soll noch einmal festgehalten werden: Vorliegend wird wiederum Luft als Heizgas h verwendet. Dessen Eingangstemperatur T_{E} im Eingangsteil 16 kann beispielsweise 400 °C betragen. Diese Temperatur T_{E} schwankt mit der Energieauskopplung aus dem Heizgaserzeuger 70, und zwar ändert sie sich mit dem Energieeintrag des in der Hochtemperatur-Brennkammer 32 verbrannten Abfalls A. Das Energiedefizit, also beispielsweise die fehlende Temperaturdifferenz ΔT = 50 °C, wird bedarfsgerecht aufgebracht durch die zweite Heizeinrichtung 22, 22a, und zwar durch bedarfsgerechte Einstellung des Luftstroms 1'. Auch hier ist ein Regelkreis für die Schwelgas-Temperatur Tₛ vorgesehen. Im Gegensatz zu Figur 1 ist hier der Temperatur-fühler 60 innerhalb der Austragseinrichtung 24 untergebracht.

Vorliegend kann zusätzlich in den Heizkreislauf auch noch eine Brennereinrichtung 46, die mit einem Brennstoff b und mit Luft 1 gespeist ist, eingeschaltet sein. Dies ist gestrichelt eingezeichnet. Diese Brennereinrichtung 46 samt Ventil 50 liegt hier zwischen dem Ausgang des Gebläses 52 und dem Einlaß 16. Sie kann bevorzugt mittels eines nicht gezeigten Regelkreises so betrieben werden, daß sie die Heizgas-Eingangstemperatur T_{E} auf einen festen Wert einregelt, beispielsweise auf 450 °C. Ein Teil der Zusatzerwärmung wird somit im vorliegenden Fall auch durch die Brennereinrichtung 46 aufgebracht. Auch hier können ein Ventil 51 und eine Abführleitung 53 vorgesehen sein.

In Figur 3 ist eine Anlage zur thermischen Abfallentsorgung gezeigt, bei der die erste Heizeinrichtung 20 einen Dampf-Luftvorwärmer 80 umfaßt, der ebenfalls zur Auskopplung von Wärme aus dem Rauchgas des Hochtemperatur-Reaktors 32 vorgesehen ist. Er ist vorliegend an einen Überhitzer 82 angeschlossen, der im Abhitze-Dampferzeuger 40 untergebracht ist. Entsprechend der Ausführungsform der Figur 2 ist der Dampf-Luftvorwärmer 80 hier vorgesehen, um die für die Verschwelung erforderliche Grundwärme in den Heizkreislauf einzuführen. Der Dampf-Luftvorwärmer 80 wird mit dem vom Überhitzer 82 abgegebenen Überhitzer-Dampf oder mit dem von diesem abgegebenen Wasser-Dampf-Gemisch gespeist. Der Vorwärmer 80 wiederum gibt erhitzte Luft als Heizgas h an die erste Heizeinrichtung 20 ab. Entsprechend zu Figur 2 sind auch hier wieder Einstellventile 72, 74 vorgesehen. Gegebenenfalls kann auch hier wieder im Heizkreislauf, das heißt parallel zu den Bauelementen 16, 10, 18 und 52, eine zusätzliche Brennereinrichtung 46, die gestrichelt eingezeichnet ist, samt Ventil 50 angeordnet sein. Sie wird wiederum von einem Brennstoff b und von Luft 1 gespeist. Mit Hilfe dieser Brennereinrichtung 46 kann die Eingangstemperatur T_{E} wiederum auf einen festen Wert geregelt werden, beispielsweise auf einen Wert T_{E} = 450 °C. Die vom Dampf-Luftvorwärmer 80 bereitgestellte vorgewärmte Luft ist dabei bezüglich ihrer Temperatur Schwankungen unterworfen und kann beispielsweise einen Mittelwert von 350 °C haben.

Entsprechend der Ausführungsform nach Figur 2 ist auch hier zu beachten, daß das Wärme-Angebot im Luftvorwärmer 80 sinkt, wenn der Energieeintrag des Abfalls A in Form des Schwelgases s und des Reststoffs r' in den Abhitze-Dampferzeuger 40 geringer wird. Im Gegensatz dazu steigt das Temperatur-Niveau an bei einem vergrößerten Energieeintrag. Um hier Abhilfe zu schaffen und eine weitgehend gleichmäßige Grunderwärmung sicherzustellen, ist vorliegend ein Rauchgas-Regelungskreis 84 vorgesehen, der für eine weitgehende Konstanthaltung der Dampf-Temperatur T_{d} des Dampf-Luftvorwärmers 80 sorgt. Man bedient sich dabei der Regelung der Dampf-Temperatur T_{d} über eine Rauchgas-Rezirkulation. Mit anderen Worten: Ein Teil des Rauchgases R, das vom Abhitze-Dampferzeuger 40 an die Rauchgasreinigungsanlage 42 abgegeben wird, wird an einer Abzweigstelle 86 abgezweigt und über ein Gebläse 87 und ein Stellglied 88 in einen Eingang 89 in den Rauchgaskanal vor dem Abhitze-Dampferzeuger 40 eingegeben. Das Stellorgan 88 kann wiederum ein Stellventil sein. Es ist an den Ausgang eines Reglers 90 angeschlossen, dessen Vergleichsglied 92 mit einem Sollwert T_{d}* für die Dampf-Temperatur T_{d} und mit dem Istwert der Dampf-Temperatur T_{d} beaufschlagt wird. Der letztgenannte Istwert T_{d} wird mit Hilfe eines Temperaturfühlers 94 in der Dampfleitung zwischen dem Überhitzer 82 und dem Dampf-Luftvorwärmer 80 abgegriffen. Der Regelkreis 84 sorgt dafür, daß die Dampf-Temperatur T_{d} weitgehend konstant gehalten wird, so daß die Wärme-Grundversorgung der ersten Heizeinrichtung 20 für die indirekte Beheizung des Pyrolysereaktors 8 ebenfalls weitgehend konstant ist.

## Patentansprüche

1. Verfahren zum Betrieb einer Anlage zur thermischen Abfall-entsorgung mit einem Pyrolysereaktor (8), der eine erste Heizeinrichtung (20) für die indirekte Beheizung des Abfalls (A) innerhalb des Pyrolysereaktors (8) besitzt, der eine zweite Heizeinrichtung (22, 22a) für die direkte Beheizung des Abfalls (A) innerhalb des Pyrolysereaktors (8) durch Lufteinspeisung aufweist und der den Abfall (A) in Schwelgas (s) und festen Pyrolysereststoff (r) umsetzt, und mit einem Hochtemperatur-Reaktor (32), in dem das Schwelgas (s) und/oder der Pyrolysereststoff (r) verbrannt wird,
**gekennzeichnet** durch
a) eine große Grunderwärmung des Abfalls (A) über die gesamte Länge des Pyrolysereaktors (8) durch die erste Heizeinrichtung (20) und
b) eine bedarfsgerechte, geregelte, kleine zusatzerwärmung des Abfalls (A) über die gesamte Länge des Pyrolysereaktors (8) durch die zweite Heizeinrichtung (22, 22a) durch Einführung von Luft (1') in den Innenraum des Pyrolysereaktors (8).

2. Verfahren nach Anspruch 1,
**dadurch gekennzeichnet,** daß die Luft (1') in den Innenraum des Pyrolysereaktors (8) so gesteuert eingeführt wird, daß die Temperatur (Tₛ) des Schwelgases (s) weitgehend konstant bleibt.

3. Verfahren nach Anspruch 1 oder 2,
**dadurch gekennzeichnet,** daß die Luft (1') in den Abfall-Ausgangsbereich des Pyrolysereaktors (8) eingeführt wird.

4. Verfahren nach einem der Ansprüche 1 bis 3,
**dadurch gekennzeichnet,** daß die erste Heizeinrichtung (20) durch den Innenraum des Pyrolysereaktors (8) hindurchgeführte Heizrohre (10) umfaßt.

5. Verfahren nach einem der Ansprüche 1 bis 4,
**dadurch gekennzeichnet,** daß zur Grunderwärmung des Abfalls (A) Wärmeenergie verwendet wird, die
a) mit Hilfe eines Energieträgers (b) gesondert erzeugt und/oder
b) als Abhitze dem Hochtemperatur-Reaktor (32) entnommen wird.

6. Anlage zur thermischen Abfallentsorgung mit einem Pyrolysereaktor (8), der eine erste Heizeinrichtung (20) für die indirekte Beheizung des Abfalls (A) innerhalb des Pyrolysereaktors (8) besitzt, der eine zweite Heizeinrichtung (22, 22a) für die direkte Beheizung des Abfalls (A) innerhalb des Pyrolysereaktors (8) durch Lufteinspeisung aufweist und der den Abfall (A) in Schwelgas (s) und festen pyrolysereststoff (r) umsetzt, und mit einem Hochtemperatur-Reaktor (32), in dem das Schwelgas (s) und/oder der Pyrolysereststoff (r) verbrannt wird,
**dadurch gekennzeichnet,** daß sich die erste Heizeinrichtung (20) zur großen Grunderwärmung des Abfalls (A) über die gesamte Länge des Pyrolysereaktors (8) erstreckt und daß die zweite Heizeinrichtung (22, 22a) für die gesamte Länge des Pyrolysereaktors (8) ausgelegt ist und zur bedarfsgerechten, geregelten, kleinen Zusatzerwärmung des Abfalls (A) eine Zuleitung für Luft (1'), die im Innenraum des Pyrolysereaktors (8) endet, aufweist.

7. Anlage nach Anspruch 6,
**dadurch gekennzeichnet,** daß die erste Heizeinrichtung (20) mindestens eine von Luft (1) und von einem Energieträger (b) gespeiste Brennereinrichtung (46) umfaßt.

8. Anlage nach Anspruch 7,
**dadurch gekennzeichnet,** daß die Brennereinrichtung (46) in einem Heizkreislauf, bevorzugt mit Gebläse (52), eingeschlossen ist.

9. Anlage nach Anspruch 6,
**dadurch gekennzeichnet,** daß die erste Heizeinrichtung (20) einen Wärmetauscher (70) umfaßt, der am Hochtemperatur-Reaktor (32) angeordnet ist.

10. Einlage nach Anspruch 9,
**dadurch gekennzeichnet,** daß der Wärmetauscher (70) in einem Heizkreislauf, bevorzugt mit Gebläse (52), eingeschlossen ist.

11. Anlage nach Anspruch 6,
**dadurch gekennzeichnet,** daß die erste Heizeinrichtung (20) einen Dampf-Luft-Vorwärmer (80) umfaßt, der an einem Überhitzer (82) im HochtemperaturReaktor (32) angeschlossen ist.

12. Anlage nach Anspruch 11,
**dadurch gekennzeichnet,** daß der Dampf-Luftvorwärmer (80) in einen Heizkreislauf, bevorzugt mit Gebläse (52), eingeschlossen ist (Figur 3).

13. Anlage nach Amspruch 11 oder 12,
**dadurch gekennzeichnet,** daß zur Regelung der Dampf-Temperatur (T_{d}) des Dampf-Luftvorwärmers (80) ein Rauchgas-Regelungskreis (84) vorgesehen ist (Figur 3).

14. Anlage nach einem der Ansprüche 6 bis 13,
**dadurch gekennzeichnet,** daß die zweite Heizeinrichtung (22, 22a) mindestens eine Luftdüse (54, 54a) umfaßt, deren Luftstrom (1') über einen Regler (64), bevorzug einen Schwelgas-Temperatur-Regler, regelbar ist (Figuren 1 bis 3).

15. Anlage nach Anspruch 14,
**dadurch gekennzeichnet,** daß der Regler (64) an einen Temperatur-Sensor (60) angeschlossen ist, der in der Schwelgasleitung (29), die von einer Austragsvorrichtung (24) ausgeht, angeordnet ist.

16. Anlage nach Anspruch 14 oder 15,
**dadurch gekennzeichnet,** daß der Regler (64) ausgangsseitig an ein Stellventil (66) angeschlossen ist, das zur Steuerung des Luftstroms (1') in den Innenräum des Pyrolysereaktors (8) vorgesehen ist.

## Claims

1. Process for operating a plant for thermal waste disposal having a pyrolysis reactor (8), which possesses a first heating device (20) for the indirect heating of the waste (A) within the pyrolysis reactor (8), which is provided with a second heating device (22, 22a) for the direct heating of the waste (A) within the pyrolysis reactor (8) by air feed and which converts the waste (A) into low-temperature carbonization gas (s) and solid pyrolysis residue (r), and having a high-temperature reactor (32) in which the low-temperature carbonization gas (s) and/or the pyrolysis residue (r) is burnt,
characterized by
a) a large basal heating of the waste (A) over the entire length of the pyrolysis reactor (8) by the first heating device (20) and
b) a controlled, small supplementary heating of the waste (A), in accordance with requirements, over the entire length of the pyrolysis reactor (8) by the second heating device (22, 22a) by introducing air (1') into the interior of the pyrolysis reactor (8).

2. Process according to Claim 1, characterized in that the air (1') is introduced into the interior of the pyrolysis reactor (8) under control in such a way that the temperature (Ts) of the low-temperature carbonization gas (s) remains substantially constant.

3. Process according to Claim 1 or 2, characterized in that the air (1') is introduced into the waste exit region of the pyrolysis reactor (8).

4. Process according to one of Claims 1 to 3, characterized in that the first heating device (20) includes heating tubes (10) passed through the interior of the pyrolysis reactor (8).

5. Process according to one of Claims 1 to 4, characterized in that, for the basal heating of the waste (A), heat energy is used which
a) is generated separately with the aid of a fuel (b) and/or
b) is taken off as waste heat from the high-temperature reactor (32).

6. Plant for thermal waste disposal having a pyrolysis reactor (8), which possesses a first heating device (20) for the indirect heating of the waste (A) within the pyrolysis reactor (8), which is provided with a second heating device (22, 22a) for the direct heating of the waste (A) within the pyrolysis reactor (8) by air feed and which converts the waste (A) into low-temperature carbonization gas (s) and solid pyrolysis residue (r), and having a high-temperature reactor (32), in which the low-temperature carbonization gas (s) and/or the pyrolysis residue (r) is burnt, characterized in that the first heating device (20) for large basal heating of the waste (A) extends over the entire length of the pyrolysis reactor (8) and in that the second heating device (22, 22a) is designed for the entire length of the pyrolysis reactor (8) and, for the controlled, small supplementray heating of the waste (A), in accordance with requirements, has a feed line for air (1') which ends in the interior of the pyrolysis reactor (8).

7. Plant according to Claim 6, characterized in that the first heating device (20) includes at least one burner device (46) fed with air (1) and a fuel (b).

8. Plant according to Claim 7, characterized in that the burner device (46) is incorporated into a heating circulation, preferably having a fan (52).

9. Plant according to Claim 6, characterized in that the first heating device (20) includes a heat exchanger (70) which is arranged on the high-temperature reactor (32).

10. Plant according to Claim 9, characterized in that the heat exchanger (70) is incorporated into a heating circulation, preferably having a fan (52).

11. Plant according to Claim 6, characterized in that the first heating device (20) includes a steam air preheater (80) which is connected to a superheater (82) in the high-temperature reactor (32).

12. Plant according to Claim 11, characterized in that the steam air preheater (80) is incorporated into a heating circulation, preferably having a fan (52) (Figure 3).

13. Plant according to Claim 11 or 12, characterized in that, to regulate the steam temperature (Td) of the steam air preheater (80), a flue gas control circuit (84) is provided (Figure 3).

14. Plant according to one of Claims 6 to 13, characterized in that the second heating device (22, 22a) includes at least one air nozzle (54, 54a), the air stream (1') of which is controllable via a controller (64), preferably a low-temperature carbonization gas temperature controller (Figures 1 to 3).

15. Plant according to Claim 14, characterized in that the controller (64) is connected to a temperature sensor (60) which is arranged in the low-temperature carbonization gas line (29) which starts from a discharge apparatus (24).

16. Plant according to Claim 14 or 15, characterized in that the controller (64) is connected on the output side to an adjustable valve (66) which is provided for control of the air stream (1') into the interior of the pyrolysis reactor (8).

## Revendications

1. Procédé pour faire fonctionner une installation d'élimination thermique des déchets, comportant un réacteur de pyrolyse (8), qui possède un premier dispositif de chauffage (20) pour le chauffage indirect des déchets (A) à l'intérieur du réacteur de pyrolyse (8), lequel comporte un deuxième dispositif de chauffage (22, 22a) pour le chauffage direct des déchets (A) à l'intérieur du réacteur de pyrolyse (8) sous l'effet d'une injection d'air, et qui convertit les déchets (A) en un gaz de carbonisation (s) et en un réacteur de pyrolyse solide (r), et comportant un réacteur à haute température (32), dans lequel le gaz de carbonisation (s) et/ou le réacteur de pyrolyse (r) sont brûlés,
caractérisé par
a) un chauffage de base important des déchets (A) sur toute la longueur du réacteur de pyrolyse (8) par le premier dispositif de chauffage (20), et
b) un petit chauffage supplémentaire, régulé, fourni en fonction des besoins, des déchets (A) sur toute la longueur du réacteur de pyrolyse (8) par le deuxième dispositif de chauffage (22, 22a), sous l'effet de l'introduction d'air (I') dans l'espace intérieur du réacteur de pyrolyse (8).

2. Procédé selon la revendication 1, caractérisé en ce que l'air (I') est introduit dans l'espace intérieur du réacteur de pyrolyse (8) en étant régulé de façon que la température (Tₛ) du gaz de carbonisation (s) reste pour ainsi dire constante.

3. Procédé selon la revendication i ou 2, caractérisé en ce que l'air (I') est introduit dans la zone de sortie des déchets du réacteur de pyrolyse (8).

4. Procédé selon l'une des revendications 1 à 3, caractérisé en ce que le premier dispositif de chauffage (20) comporte des tubes de chauffage (10) qui traversent l'espace intérieur du réacteur de pyrolyse (8).

5. Procédé selon l'une des revendications 1 à 4, caractérisé en ce qu'on utilise pour le chauffage de base des déchets (A) une énergie thermique
a) qui est spécialement produite à l'aide d'un caloporteur (b), et/ou
b) est prélevée en tant que chaleur perdue du réacteur à haute température (32).

6. Installation d'élimination thermique des déchets, comportant un réacteur de pyrolyse (8), qui possède un premier dispositif de chauffage (20) pour le chauffage indirect des déchets (A) l'intérieur du réacteur de pyrolyse (8), lequel comporte un deuxième dispositif de chauffage (22, 22a) pour le chauffage direct des déchets (A) à l'intérieur du réacteur de pyrolyse (8) sous l'effet d'une injection d'air, et qui convertit les déchets (A) en un gaz de carbonisation (s) et un réacteur de pyrolyse solide (r), et comportant un réacteur à haute température (32), dans lequel le gaz de carbonisation (s) et/ou le réacteur de pyrolyse (r) sont brûlés, caractérisée en ce que le premier dispositif de chauffage (20), pour le chauffage de base important des déchets (A), s'étend sur toute la longueur du réacteur de pyrolyse (8), et que le deuxième dispositif de chauffage (22, 22a) est conçu pour toute la longueur du réacteur de pyrolyse (8) et, pour assurer le petit chauffage supplémentaire régulé, fourni en fonction des besoins, des déchets (A), comporte une conduite d'amenée d'air (I'), qui débouche dans l'espace intérieur du réacteur de pyrolyse (8).

7. Installation selon la revendication 6, caractérisée en ce que le premier dispositif de chauffage (20) comporte au moins un dispositif de brûleurs (46) alimenté par de l'air (I) et un caloporteur (b).

8. Installation selon la revendication 7, caractérisée en ce que le dispositif de brûleurs (46) est inséré dans un circuit de chauffage, de préférence avec un ventilateur (52).

9. Installation selon la revendication 6, caractérisée en ce que le premier dispositif de chauffage (20) comporte un échangeur de chaleur (70), qui est disposé contre le réacteur à haute température (32).

10. Installation selon la revendication 9, caractérisée en ce que l'échangeur de chaleur (70) est inséré dans un. circuit de chauffage, de préférence avec un ventilateur (52).

11. Installation selon la revendication 6, caractérisée en ce que le premier dispositif de chauffage (20) comporte un préchauffeur de vapeur-air (80), qui est raccordé à un surchauffeur (82) dans le réacteur à haute température (32).

12. Installation selon la revendication 11, caractérisée en ce que le préchauffeur de vapeur-air (80) est inséré dans un circuit de chauffage, de préférence avec un ventilateur (52) (Figure 3).

13. Installation selon la revendication 11 ou 12, caractérisée en ce que, pour la régulation de la température de vapeur (T_{d}) du préchauffeur de vapeur-air (80), on prévoit un circuit (84) de régulation des fumées (Figure 3).

14. Installation selon l'une des revendications 6 à 13, caractérisée en ce que le deuxième dispositif de chauffage (22, 22a) comporte au moins une buse d'air (54, 54a), dont le débit d'air (I') peut être régulé par un régulateur (64), de préférence un régulateur de température du gaz de carbonisation (Figures 1 à 3).

15. Installation selon la revendication 14, caractérisée en ce que le régulateur (64) est raccordé à un capteur de température (60), qui est disposé dans la conduite (29) de gaz de carbonisation qui part du dispositif de décharge (24).

16. Installation selon la revendication 14 ou 15, caractérisée en ce que le régulateur (64) est, côté sortie, raccordé à une vanne de réglage (66), qui est prévue pour commander le débit d'air (I') pénétrant dans l'espace intérieur du réacteur de pyrolyse (8).
